# EUROPÄISCHE PATENTANMELDUNG

(11) **EP 1 462 320 A2**
(43) Veröffentlichungstag der Anmeldung: **29.09.2004**
(21) Anmeldenummer: 04004437.2
(22) Anmeldetag: 26.02.2004
(51) Int. Cl.: B60R 21/16

(54) **Gassackmodul**

(30) Priorität: 25.03.2003 DE 20304810 U
(71) Anmelder: TRW Automotive Safety Systems GmbH, 63743 Aschaffenburg (DE)
(72) Erfinder: Koch, Ralf, Dr., 64521 Gross-Gerau (DE); Ritter, Philipp, 73525 Schwäbisch Gmünd (DE)
(74) Vertreter: Kitzhofer, Thomas, Dipl.-Ing.

(57) **Zusammenfassung**

Ein Gassackmodul hat einen eine Gassackwand aufweisenden Gassack (12), und die Gassackwand weist eine als Aufprallfläche (32) für den Insassen dienende Vorderwand (14) mit einer zentrischen Mündung (30) als Übergang zu einer Einbuchtung (28) aufweist. Die Einbuchtung (28) ist dadurch gebildet, daß ein Zentrumsabschnitt der Gassackwand beim Aufblasen an einer freien Bewegung gehindert und zurückgehalten wird. Die Mündung (30) ist von einem von der Gassackwand separaten Stabilisierungsmittel (34) umgeben, das im Bereich der Mündung (30) als in sich geschlossener Ring ausgebildet ist.

## Beschreibung

Die Erfindung betrifft ein Gassackmodul mit einem eine Gassackwand aufweisenden Gassack, wobei die Gassackwand eine als Aufprallfläche für einen Insassen dienende Vorderwand mit einer zentrischen Mündung als Übergang zu einer Einbuchtung aufweist, wobei die Einbuchtung dadurch gebildet ist, daß ein Zentrumsabschnitt der Gassackwand beim Aufblasen an einer freien Bewegung gehindert und zurückgehalten wird.

Ein derartig geformter Gassack bietet eine für den Fahrzeuginsassen komfortablere Rückhaltewirkung als ein konventioneller ballonförmiger Gassack, da die im wesentlichen ringförmige Rückhaltekammer in Zusammenwirkung mit der nicht aufgeblasenen Einbuchtung (deren Mündung natürlich so ausgelegt ist, daß der Kopf des Fahrzeuginsassen nicht in Kontakt mit Fahrzeugteilen kommen kann) ein sanfteres Auffangen des Fahrzeuginsassen bewirkt. Es sind jedoch aufwendige Zuschnitte erforderlich, um dem Gassack im aufgeblasenen Zustand die gewünschte Form zu verleihen, was zu hohen Herstellungskosten fährt.

Der Erfindung stellt sich die Aufgabe, die Formgebung eines Gassacks für ein derartiges Gassackmoduls zu vereinfachen.

Dies wird bei einem oben genannten Gassackmodul dadurch erreicht, daß die Mündung von einem von der Gassackwand separaten Stabilisierungsmittel umgeben ist, das im Bereich der Mündung als in sich geschlossener Ring ausgebildet ist. Das Stabilisierungsmittel bestimmt direkt die Größe der Mündung und über seine Anordnung auch die Tiefe des aufgeblasenen Gassacks. Die Größe, der Querschnitt und der Durchmesser der Mündung werden bei der Fertigung des Gassackmoduls aufgrund Form und Anordnung des Stabilisierungsmittels festgelegt.

Die Elastizität des Stabilisierungsmittels kann sehr gering sein, damit sich der Durchmesser der Mündung exakt definieren läßt.

Das Stabilisierungsmittel ist bevorzugt ein Band oder ein Gewebering, es kann aber auch durch eine Schnur gebildet sein oder ein anderer geeigneter, umfangsmäßig geschlossener, ringförmiger Gegenstand sein.

In einer bevorzugten Ausführungsform der Erfindung ist das Stabilisierungsmittel in einem an der Vorderwand ausgebildeten Kanal angeordnet. Der Kanal kann z.B. durch einen die Mündung ringförmig umgebenden Gewebestreifen gebildet sein, der an der Vorderwand des Gassacks befestigt ist. Bevorzugt ist das Stabilisierungsmittel gegenüber der Wandung des Kanals verschiebbar. So läßt sich das Stabilisierungsmittel sicher und positionsgenau anordnen. Da das Stabilisierungsmittel lose im Kanal liegt, kann sich die auf das Stabilisierungsmittel und den Kanal ausgeübte Belastung bei der Entfaltung des Gassacks und beim Aufprall des Fahrzeuginsassen gleichmäßig verteilen.

Das Gassackmodul ist auf bekannte Art mit einer Abdeckung versehen, die sich bei der Entfaltung des Gassacks teilweise öffnet, um den Gassack freizugeben. Bevorzugt weist die Abdeckung einen mittigen, beim Aufreißen der Abdeckung feststehenden Abschnitt, z.B. ein Emblem, auf, dessen Position sich beim Austreten des Gassacks gegenüber dem Gassackmodul nicht verändert, und das Stabilisierungsmittel und der feststehende Abschnitt der Abdeckung sind so aufeinander abgestimmt, daß das Stabilisierungsmittel in einem gefalteten Zustand des Gassacks den feststehenden Abschnitt der Abdeckung umgibt und beim Entfalten an dem feststehenden Abschnitt entlang nach außen bewegt wird. Sind beide Bauteile kreisförmig, bedeutet dies, daß der Durchmesser des Stabilisierungsmittels wenigstens gleich oder geringfügig größer als der Durchmesser des feststehenden Abschnitts sein muß, so daß das Stabilisierungsmittel den feststehenden Abschnitt konzentrisch umgeben kann. Bei von der Kreisform abweichenden Gestaltung des feststehenden Abschnitts bzw. des Stabilisierungsmittels sind Formen und Größen entsprechend anzupassen. Bei der Entfaltung des Gassacks hebt dann die Vorderwand des Gassacks mit dem Stabilisierungsmittel ohne Behinderung durch den feststehenden Abschnitt der Abdeckung ab.

Die Erfindung bietet auch den Vorteil, daß die Einbuchtung durch einen einstückig mit der Vorderwand verbundenen Wandungsabschnitt begrenzt sein kann, wodurch sich die Zahl der für die Fertigung des Gassacks benötigten Gewebeabschnitte reduziert. Im Prinzip läßt sich die gesamte Vorderwand des Gassacks aus einem einzigen flachen Gewebestück fertigen. Hierbei kann der Zentrumsabschnitt der Vorderwand an geeigneter, fest vorgegebener Stelle durch das Stabilisierungsmittel eingeschnürt werden, so daß sich eine Einbuchtung mit gewünschtem Durchmesser und Tiefe ergibt.

Die Vorderwand des Gassacks kann mit einer Rückwand des Gassacks auf bekannte Weise über wenigstens ein Fangband verbunden sein, das die Form des Gassacks im aufgeblasenen Zustand mitbestimmt. Das oder die Fangbänder können auch an anderen Bauteilen des Gassackmoduls befestigt sein.

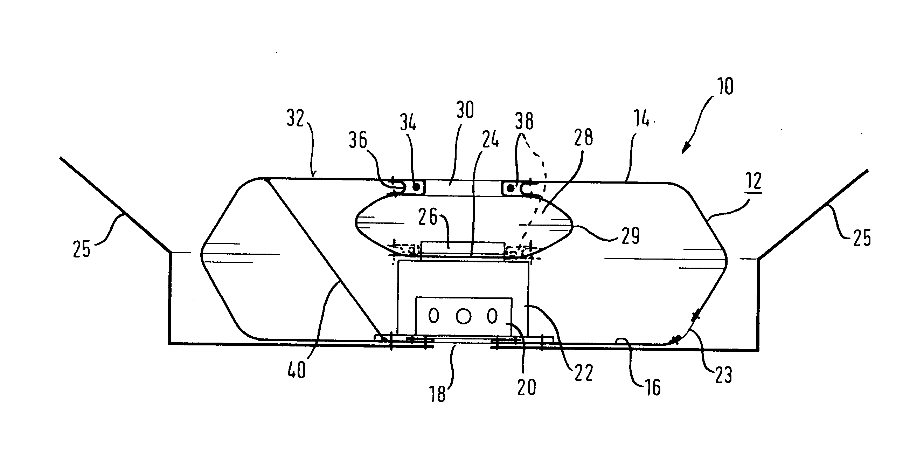

Weitere Merkmale und Vorteile der Erfindung ergeben sich aus der nachfolgenden Beschreibung eines Ausführungsbeispiels in Verbindung mit der beigefügten Zeichnung. Die einzige Figur zeigt einen schematischen Querschnitt durch ein erfindungsgemäßes Gassackmodul mit einem Gassack im teilweise aufgeblasenen Zustand.

Das gezeigte Gassackmodul 10 weist einen Gassack 12 auf, der durch eine Gassackwand definiert ist, die u.a. eine Vorderwand 14 und eine Rückwand 16 umfaßt. Über einen Einblasmund 18 in das Innere des Gassacks 12 eingesetzt sind eine Druckgasquelle, z.B. ein bekannter topfförmiger Gasgenerator 20 und ein den Gasgenerator umgebender Diffusor 22. Der Diffusor 22 kann auch ein Käfig oder ein ähnliches Bauteil sein. Gasgenerator 20, Diffusor 22 und Rückwand 16 des Gassacks 12 sind auf konventionelle bekannte Weise miteinander verbunden. In der Rückwand 16 des Gassacks 12 ist eine Ausströmöffnung 23 vorgesehen, durch die beim Aufprall des Fahrzeuginsassen auf den Gassack 12 Gas aus dem Gassack 12 entweichen kann.

Die Vorderwand 14 des Gassacks 12 hat im aufgeblasenen Zustand eine zentrische Öffnung, die die Mündung 30 einer vorderseitigen, tiefen Einbuchtung 28 bildet. Diese Einbuchtung 28 ist dadurch gebildet, daß ein Zentrumsabschnitt 24 desjenigen Abschnitts 29 der Gassackwand, der die Einbuchtung 28 begrenzt, an einer freien oder an jeglicher Bewegung beim Entfalten des Gassacks 12 gehindert wird. Hierzu ist der Zentrumsabschnitt 24 der Gassackwand (tiefste Stelle der Einbuchtung 28) zwischen der Oberseite des Diffusors 22 und einem mittigen, feststehenden Abschnitt 26 einer nur angedeuteten Abdeckung 25 des Gassackmoduls 10 geklemmt, so daß sich der Zentrumsabschnitt 24 beim Aufblasen des Gassacks 12 nicht in Richtung eines Fahrzeuginsassen bewegt, sondern am Diffusor 22 zurückgehalten wird. Dies verleiht dem eine einzige Ringkammer besitzenden Gassack 12 im aufgeblasenen Zustand eine charakteristische Ringform, wobei im Bereich des Zentrumsabschnitts 24 eine Einbuchtung 28 ausgebildet ist, die zum Fahrzeuginsassen hin gerichtet eine vorzugsweise offene Mündung 30 aufweist. Die Mündung 30 umgebend definiert die Vorderwand 14 des Gassacks 12 eine Prallfläche 32, mit der der Fahrzeuginsasse beim Aufprall in Kontakt kommt.

Ein die Mündung 30 umschließender, im Bereich der Mündung 30 geschlossen umlaufender Ring bildet ein Stabilisierungsmittel 34, das z.B. ein Band oder ein Gewebering oder aber auch eine Schnur oder ein Gummiband ist. Das Stabilisierungsmittel ist in einem durch einen mit der Vorderwand 14 im Bereich der Mündung 30 vernähten Gewebestreifen 36 gebildeten Kanal 38 aufgenommen und gegenüber den Wandungen des Kanals 38 verschiebbar angeordnet. Der Kanal 38 kann vollständig geschlossen oder teilweise offen sein. Form, Durchmesser und die Position des Stabilisierungsmittels 34 bestimmen Form und Durchmesser der Mündung 30 sowie die Tiefe der Einbuchtung 28.

Das Stabilisierungsmittel 34 weist in diesem Beispiel eine nur sehr geringe Eigenelastizität auf, so daß der Durchmesser der Mündung 30 beim Aufprall eines Fahrzeuginsassen nicht oder nur unwesentlich vergrößert wird.

Form und Durchmesser des Stabilisierungsmittels 34 sind an Form und Durchmesser des feststehenden Abschnitts 26 der Abdeckung 25 so angepaßt, daß im gefalteten Zustand des Gassacks das Stabilisierungsmittel 34 den feststehenden Abschnitt 26 umgibt (in gestrichelten Linien gezeigt). Das Stabilisierungsmittel 34 liegt zusammen mit einem Teil des gefalteten Gassacks 12 auf der Oberseite des Diffusors 22 auf. Bei der Entfaltung des Gassacks beim Aufblasen des Gassacks 12 durch den Gasgenerator 20 öffnen sich die beweglichen Abschnitte der Abdeckung 25, und das Stabilisierungsmittel 34 bewegt sich in der Austrittsrichtung des Gassacks 12 am feststehenden Abschnitt 26 der Abdeckung 25 entlang nach außen in Richtung des Fahrzeuginsassen.

Im gezeigten Beispiel ist die Einbuchtung 28 durch einen einstückig mit der Vorderwand 14 verbundenen Abschnitt 29 der Gassackwandung begrenzt, d.h. die Vorderwand 14 und der Abschnitt 29 werden durch ein Gewebeteil gebildet, das zur Bildung der Einbuchtung im Zentrum nach innen, durch das Stabilisierungsmittel 14 hindurch gestülpt wurde. Form und Tiefe der Einbuchtung 28 werden hier nur durch Form und Position des Stabilisierungsmittels 34 bestimmt. Durch die einstückige Ausbildung der Einbuchtung 28 mit der Vorderwand 14 reduzieren sich Zuschnitt- und Nähaufwand gegenüber einem aus Ringsegmenten zusammengesetzten Gassack. Die Erfindung läßt sich jedoch auch in anderen Gassackkonstruktionen umsetzen.

Die Formgebung des aufgeblasenen Gassacks 12 wird beim gezeigten Gassackmodul zusätzlich durch Fangbänder 40 unterstützt, die sich zwischen Vorderund Rückwand 14, 16 des Gassacks 12 erstrecken und zusätzlich mit dem Zentrumsabschnitt 24 der Vorderwand 14 verbunden sind. Die Erfindung ist jedoch völlig unabhängig von der Verwendung von Fangbändern.

## Patentansprüche

1. Gassackmodul mit einem eine Gassackwand aufweisenden Gassack (12),
wobei die Gassackwand in einem aufgeblasenen Zustand des Gassacks eine als Aufprallfläche (32) für einen Insassen dienende Vorderwand (14) mit einer zentrischen Mündung (30) als Übergang zu einer Einbuchtung (28) aufweist, wobei die Einbuchtung (28) dadurch gebildet ist, daß ein Zentrumsabschnitt der Gassackwand beim Aufblasen an einer freien Bewegung gehindert und zurückgehalten wird,
**dadurch gekennzeichnet, daß** die Mündung (30) von einem von der Gassackwand separaten Stabilisierungsmittel (34) umgeben ist, das im Bereich der Mündung (30) als in sich geschlossener Ring ausgebildet ist.

2. Gassackmodul nach Anspruch 1, **dadurch gekennzeichnet, daß** das Stabilisierungsmittel (34) ein Band ist.

3. Gassackmodul nach Anspruch 1, **dadurch gekennzeichnet, daß** das Stabilisierungsmittel (34) ein Gewebering ist.

4. Gassackmodul nach einem der vorhergehenden Ansprüche, **dadurch gekennzeichnet, daß** das Stabilisierungsmittel (34) in einem an der Vorderwand (14) ausgebildeten Kanal (38) angeordnet ist.

5. Gassackmodul nach Anspruch 4, **dadurch gekennzeichnet, daß** der Kanal (38) durch einen die Mündung (30) ringförmig umgebenden Gewebestreifen (36), der an der Vorderwand (14) des Gassacks (12) befestigt ist, gebildet ist.

6. Gassackmodul nach einem der Ansprüche 4 und 5, **dadurch gekennzeichnet, daß** das Stabilisierungsmittel (34) gegenüber einer Wandung des Kanals (38) verschiebbar ist.

7. Gassackmodul nach einem der vorhergehenden Ansprüche, **gekennzeichnet durch** eine Abdeckung (25) mit einem mittigen, beim Aufreißen der Abdekkung (25) feststehenden Abschnitt (26), wobei das Stabilisierungsmittel (34) und der feststehende Abschnitt (26) der Abdeckung (25) so aufeinander abgestimmt sind, daß das Stabilisierungsmittel (34) in einem gefalteten Zustand des Gassacks (12) den feststehenden Abschnitt (26) umgibt und beim Entfalten an dem feststehenden Abschnitt (26) entlang nach außen bewegt wird.

8. Gassackmodul nach einem der vorhergehenden Ansprüche, **dadurch gekennzeichnet, daß** die Einbuchtung (28) durch einen einstückig mit der Vorderwand (14) verbundenen Abschnitt (29) der Gassackwand begrenzt ist.

9. Gassackmodul nach einem der vorhergehenden Ansprüche, **dadurch gekennzeichnet, daß** die Vorderwand (14) mit einer Rückwand (16) des Gassacks (12) über wenigstens ein Fangband (40) verbunden ist, das die Form des Gassacks (12) im aufgeblasenen Zustand mitbestimmt.
